# EUROPEAN PATENT APPLICATION

(11) **EP 2 736 021 A2**
(43) Date of publication of application: **28.05.2014**
(21) Application number: 13194513.1
(22) Date of filing: 26.11.2013
(51) Int. Cl.: G07C 9/00, H04W 4/00

(54) **Access control system**

(30) Priority: 27.11.2012 US 201261730416 P
(71) Applicant: ASSA ABLOY AB, 107 23 Stockholm (SE)
(72) Inventor: Aase, Halvor, 1536 Moss (NO)
(74) Representative: Grosfillier, Philippe

(57) **Abstract**

The present disclosure is generally directed toward access control systems and, more specifically, toward access control systems that utilize Near Field Communications (NFC)-enabled devices. The disclosed system enables an NFC device to be remotely checked-in to the access control system; however, the NFC device operates in a read/write mode rather than a card emulation mode when interacting with RFID readers of the access control system.

## Description

### CROSS-REFERENCE TO RELATED APPLICATIONS

The present application claims the benefit of U.S. Provisional Patent Application No. 61/730,416, filed on November 27, 2012, the entire contents of which are hereby incorporated herein by reference.

### FIELD OF THE DISCLOSURE

The present disclosure is generally directed toward the use of near field communication (NFC)-enabled devices, such as mobile phones, in access control environments using radio frequency identification (RFID) communication.

### BACKGROUND

RFID is currently the dominating technology in physical access control systems. Typical to such systems are "card" readers normally mounted in proximity to a physical point of access (e.g., on a wall next a door or gate or on the doors or gates themselves). The readers read a RFID tag embedded in a card, key fob, sticker or similar form factor. The most popular RFID tags utilize a read/write memory, and many card readers can also read from and write to the tag memory.

Four standards currently dominate RFID communication: ISO/IEC 14443-A, ISO/IEC 14443-B, ISO/IEC 15693, ISO/IEC 18902, and JIS X6319-4, each of which are hereby incorporated herein by reference in their entirety. Most access control systems installed over the last decade support one or more of these standards, or can be upgraded to support one or more of these standards. Consequently, there is a huge legacy of installed access control readers that use these standards on global basis.

The same RFID standards are used for other applications such as transport, luggage identification, ticketing, payment according to the Contactless EMV standard (Europay, MasterCard, Visa), and more.

Due to the wide spread implementation of these RFID standards, the NFC technology that is developed for use in mobile devices, such as smart phones and tablet devices, builds upon the same RFID standards. One could say that NFC is RFID embedded in a phone, instead of a RFID embedded in to a card, key fob, sticker or even a card reader embedded in a phone.

The NFC hardware can either be an integral part of the mobile device or phone or it can be removable (e.g., a removable NFC chip or device). NFC devices can typically operate in any one of three modes, where the first two modes are most commonly used: (1) card emulation mode; (2) read / write mode; and (3) peer-to-peer mode.

In the card emulation mode, an NFC device emulates a contactless card in accordance with the above-identified ISO standards, each of which are hereby incorporated herein by reference in their entirety. Typical applications of the card emulation mode include access control applications, as well as payment and ticketing.

In the read/write mode, the NFC device a tag and typically perform some function based on the information obtained from the read tag. Typical applications of the read/write mode include reading posters with an NFC tag in proximity thereto, interactive advertising, launching mobile Internet (e.g., automated web-browser activation), automated Short Message Service (SMS), and automated call initiation.

In the peer-to-peer mode, two NFC device, or similar types of devices, are allowed to exchange data with one another. Typical applications of the peer-to-peer mode include setting up wireless settings (e.g., Bluetooth, Wi-Fi, etc.), sharing business cards, or sharing information between the two devices.

The intention of card emulation is to be able to use the NFC device as a card in the mentioned applications (e.g. access control and payment).

The NFC card emulation mode is controlled by the Mobile Network Operators (MNOs) via what is called a secure element in the Subscriber Identity Module (SIM) card or some other known device (embedded or removable). The user may need to have a new SIM card prepared for NFC from the MNO if their phone is not natively equipped with a secure element.

In addition to the SIM card, the NFC card emulation should be enabled on the phone's operating system. It is not clear if all MNOs include this option and how users will gain access to the option, and it may be that users have to subscribe to and/or purchase this option. Consequently, NFC card emulation for access control will depend on: (1) the timing of MNOs roll out of NFC card emulation in the mobile networks and (2) the cost to subscribe to the service and what the users are willing to pay.

To be able to use NFC phones for access control independently of the MNOs' control over the card emulation mode, there is a need for a different way to achieve NFC card emulation, including developing a way that can work on the installed base of legacy card readers.

### SUMMARY

The NFC modes that are not under control of the MNOs, are: (1) The NFC read/write mode and (2) the NFC peer-to-peer mode. In the NFC read/write mode, the NFC device reads data from or writes data to RFID tags. This functionality is available on all NFC phones currently released; it is directly compatible with four main standards identified above; and, it is not considered a mode that will generate revenue, and is thereby considered "harmless" to MNOs.

The NFC peer-to-peer mode is a point-to-point communication between two NFC devices to exchange data and a new mode introduced with NFC. It is available to use, but since it competes with Bluetooth (where Bluetooth is faster and handles more devices at a reasonable low energy consumption), there are very few phones that support this mode of operation.

To bypass the MNOs' control or influence over the NFC card emulation mode, the solution described herein is to use NFC read/write mode, as it is the only NFC mode enabled on current NFC phone and the usage of it is not restricted or controlled by most MNOs.

One aspect of the present disclosure utilizes an RFID tag, the same or similar to those embedded into cards, and that current card readers can read. The RFID tag is permanently placed in the proximity of a lock's RFID reader, which is equipped with read/write capabilities. In this manner, the NFC device (e.g., mobile phone or smart phone) can write data to the RFID tag, while the RFID reader of the lock can read the data from the RFID tag. All three devices may exchange information with one another utilizing the NFC read/write mode, for example.

In accordance with at least one embodiment, the following scenario can be supported by operating an access control system as described above. The guest has a room reservation and prior to arrival the guest receives the option to check-in remotely. Remote check-in can be performed with any type of device, such as a NFC-enabled smart phone or the like. When the guest checks in remotely from an NFC device, the access control system creates a digital key with required access rights. The digital key is sent to the guest's NFC device where it is stored in memory (e.g., in memory of the NFC device, in a secure element of the NFC device, etc.). Upon arriving to the hotel, the guest presents the NFC device to the lock or more specifically the RFID reader associated with the lock. The NFC device uses NFC read/write to write information to the RFID tag located proximate to the lock, for example, embedded, hidden in or placed behind the front cover of the RFID reader. As an example, the RFID tag is within an acceptable NFC transmission range of the lock (e.g., within approximately 2 feet or less and preferably within 6 inches or less). The information read and/or written may be in the form of one or more NFC Data Exchange Format (NDEF) records. The RFID reader has read/write capabilities and reads the digital key of the RFID tag embedded, hidden or placed behind and, if valid, opens the lock.

In the above-described scenario, the check-in process and guest interaction with NFC phone and lock is the same as if the NFC device were operating in the card emulation mode. Furthermore, the user is allowed to perform remote check-in processes with their NFC device, thereby obviating the need to visit the front desk of the hotel upon arriving at the hotel.

This solution will work on almost all existing and future NFC device. It is independent of MNOs' control or influence over NFC card emulation mode. Further still, the proposed solution can work with locks and devices that already can read a RFID tag (e.g., legacy readers).

In one embodiment, a method of operating an access control system, the method comprising:
receiving a key at a Near Field Communications (NFC) device;
storing the key in memory of the NFC device;
presenting the NFC device to a Radio Frequency Identification (RFID) reader located in proximity to a point of access control;
while the NFC device is presented to the RFID reader, writing the key to an RFID tag that is positioned in proximity to the RFID reader;
reading the key from the RFID tag with the RFID reader;
comparing the key read from the RFID tag with one or more valid keys; and
based on the comparison of the key read from the RFID tag, making an access control decision for the NFC device.

In another aspect of the present disclosure, the RFID reader may be enabled to read and store the Unique Identifier (UID) of the tag in proximity therewith, thereby allowing the RFID reader to use or specifically control the permanently-placed tag, if necessary. By way of example, the RFID reader can use the UID and the anti-collision mechanisms specified in the above mentioned RFID standards to "shut down" the RFID tag to avoid communication disturbance with other tags, by example RFID tags embedded into cards and used by guests that do not have NFC device, or NFC devices that use NFC card emulation.

In another aspect of the present disclosure, the RFID reader is enabled to write back data to the RFID tag in order to exchange information with an NFC device (e.g., a phone). In this way, the RFID reader can utilize the NFC device as a mode of transporting information back to a host controller of an access control system. As an example, this exchange of information can be leveraged to delete the digital key in the RFID tag from a list of valid keys in the access control system, thereby preventing attacks on the digital key by making keys less available.

The present disclosure will be further understood from the drawings and the following detailed description. Although this description sets forth specific details, it is understood that certain embodiments of the invention may be practiced without these specific details.

### BRIEF DESCRIPTION OF THE DRAWINGS

Fig. 1 is a perspective view of an access control system in accordance with embodiments of the present disclosure;
Fig. 2 is a partially exploded view of Fig. 1, showing the face plate of the RFID reader removed and further showing an RFID tag positioned underneath the face plate;
Fig. 3A is a perspective view of the inside surface of an RFID face plate, further showing an RFID tag mounted to the face plate;
Fig. 3B is a rear elevation view of the reader face plate of Fig. 3A;
Fig. 4 is a block diagram of components of an RFID tag in accordance with embodiments of the present disclosure;
Fig. 5 is a block diagram of component of an NFC device in accordance with embodiments of the present disclosure;
Fig. 6 is a flow chart depicting a method of performing remote check-in with an NFC device in accordance with embodiments of the present disclosure;
Fig. 7 is a flow chart depicting a method of obtaining access to an access point within an access control system using an NFC device in accordance with embodiments of the present disclosure;
Fig. 8 is a flow chart depicting an anti-collision method in accordance with embodiments of the present disclosure; and
Fig. 9 is a flow chart depicting a data management method for an access control system in accordance with embodiments of the present disclosure.

### DETAILED DESCRIPTION

Access control in a hotel is used as examples in the scenarios below. These examples are for illustrative purposes only. It will be readily appreciated by those of skill in the art, upon reading this disclosure, that the described solution has wide spread applicability in not only all access control environments, but other applications. The ensuing description will provide those skilled in the art with an enabling description for implementing the described embodiments. It being understood that various changes may be made in the function and arrangement of elements without departing from the spirit and scope of the invention.

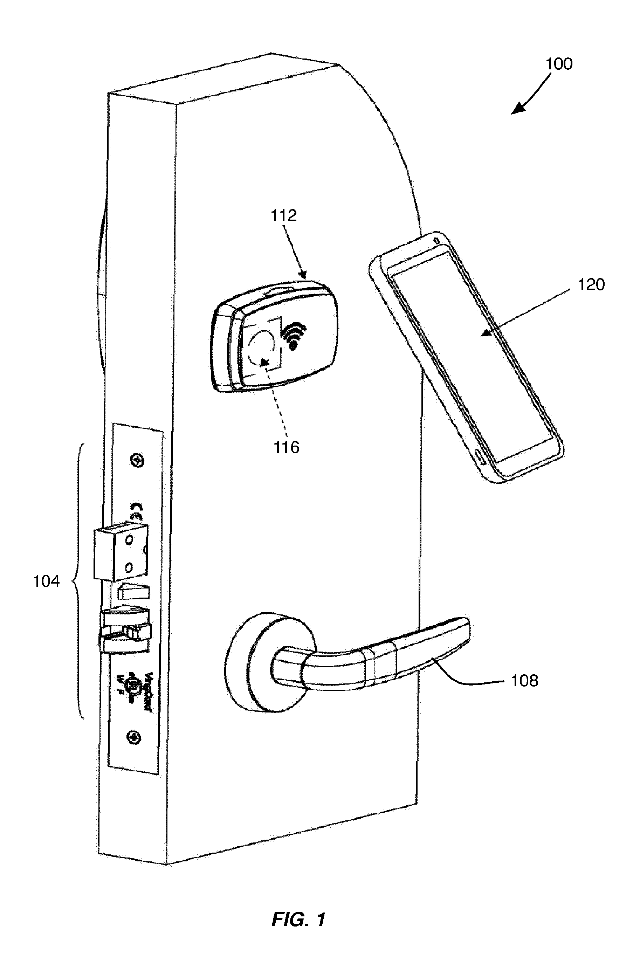

As can be seen in Figs. 1-4, an access control system may include components that secure a physical point of entry on premises. In the depicted example, the physical point of entry corresponds to a door 100 with a lock 104 integrated therein. It should be appreciated that other embodiments may comprise a lock mechanism external to a door or on a doorjamb.

The lock mechanism 104 is capable of being actuated with a handle 108 in a known fashion. It should be appreciated that the handle 108 may be replaced with any other similar mechanism known in the art (e.g., knob, insertable mechanical key, etc.). However, as will be described herein, the handle 108 may only be engaged with the lock mechanism 104 if a valid key is read at an RFID reader 112, which is also shown to be mounted to the door 100.

As used herein, a valid key may correspond to a data structure exchanged between an RFID device (e.g., an NFC-capable device 120, RFID tag 116, a different RFID tag, etc.) and the RFID reader 112. As is known in the access control arts, an access control key can be provided in any number of variations; however, for ease of discussion, a key exchanged between the RFID reader 112 and NFC device 120 may correspond to any data structure (e.g., encrypted, unencrypted, etc.) that is capable of being stored in computer memory and exchanged via RFID/NFC protocols. Thus, a key can be exchanged between the NFC device 120 and RFID reader 112 using one or more NDEF records or messages and the key may correspond to a collection of bits. In addition to requiring a valid key, the RFID reader 112 may be equipped to require additional inputs (e.g., passwords, PINs, fingerprints, etc.) to prove that a holder of the NFC device 120 also knows something or is someone with authority to open the door 100. Such authentication methods are known as dual-factor authentication methods.

In some embodiments, the NFC device 120 may obtain a valid key from a hotel service or similar security administrator of the premises on which the door 100 is mounted. As an example, the NFC device 120 may obtain a valid key or collection of keys from a hotel system in a manner similar to that described in one or more of U.S. Patent Publication Nos. 2011/0187493 and 2006/022490, filed January 29, 2010 and April 3, 2006, respectively, each of which are hereby incorporated herein by reference in their entirety.

The NFC device 120, when presented to the RFID reader 112, may have the NFC functionality contained therein become activated (e.g., by inductive coupling due to the RF field produced by the RFID reader 112). Once the NFC device 120 is within proximity of the RFID reader 112 and has become activated, the NFC device 120 enters a read/write mode of operation. While in this mode of operation, the NFC device 120 writes the key or series of keys stored thereon to the RFID tag 116.

Upon receiving the keys from the NFC device 120, the tag 116 temporarily stores the keys in its own memory. Subsequently, the RFID reader 112 reads the keys from the RFID tag 116, thereby enabling the RFID reader 112 to obtain keys from the NFC device 120 without requiring the NFC device 120 to operate in a card emulation mode. Specifically, the RFID device 120 is able to communicate keys and other data to the RFID reader 112 via the RFID tag 116.

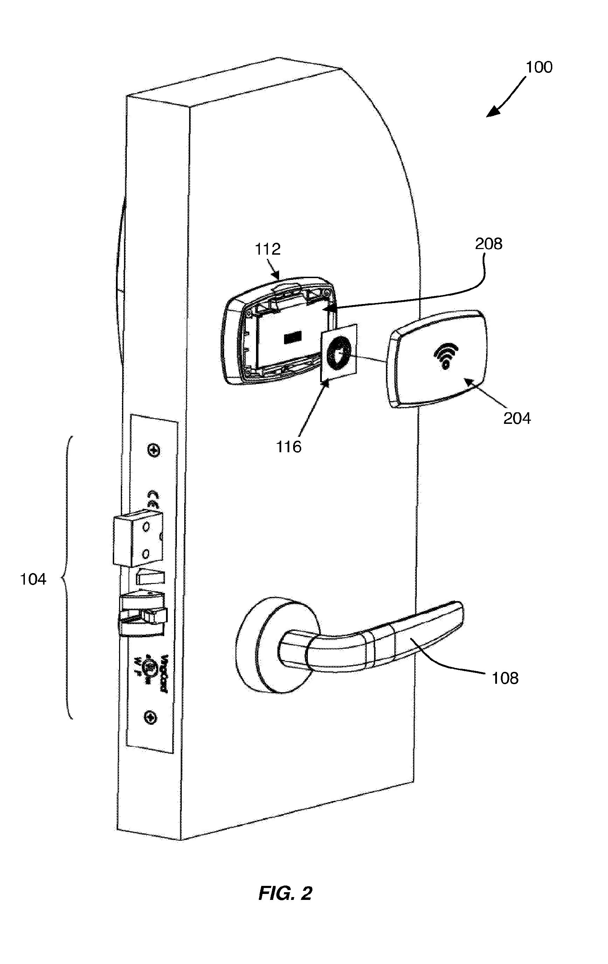

As can be seen in Fig. 2, the RFID tag 116 may be positioned behind a face plate 204 of the RFID reader 112. By placing the RFID tag 116 in this particular position, the RFID tag 116 will remain in proximity with the RFID reader 112; thus, when the NFC device 120 is presented to the RFID reader 112, the NFC device 120 is also placed within communication range of the RFID tag 116.

It should be appreciated that the RFID tag 116 does not necessarily need to be positioned behind a face plate 204 of the RFID reader 112; however, such a location provides a convenient mounting location for the RFID tag 116. In other embodiments, however, the RFID tag 116 may correspond to a sticker of the like that is positioned adjacent to the RFID reader 112.

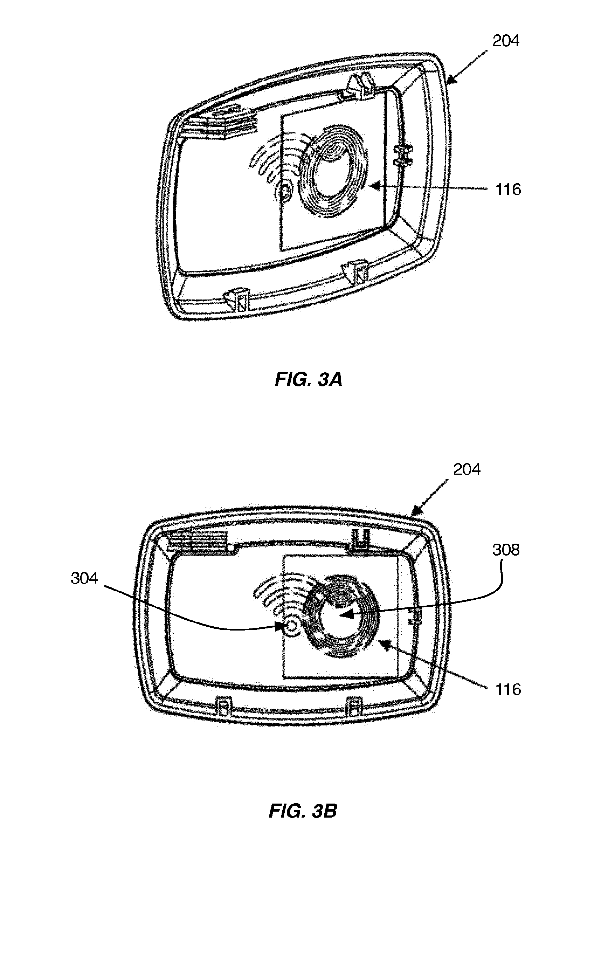

Figs. 3A and 3B show additional details regarding the relative arrangement of the RFID tag 116 and the RFID reader 112. In particular, it may be advantageous to offset the RFID tag 116 relative to the center of the RFID reader's antenna. Fig. 3B shows in detail how a center of the tag antenna 308 can be offset relative to a center of the reader antenna 304. This offsetting may be advantageous to minimize the parasitic capacitance between the antennas 304, 308. Additional details of such a feature are described in U.S. Patent No. 7,439,862, the entire contents of which are hereby incorporated herein by reference.

Although Fig. 3B does not show the reader antenna, the center of the reader antenna 304 may substantially align with a center of the face plate 204. As shown in Fig. 2, the electronic components 208 of the RFID reader 112 may be positioned substantially within a center of the reader housing. The reader antenna may wrap around the outer edges or perimeter of the housing and, therefore, be centered about the center of the face plate 204. On the other hand, the RFID tag 116 can be offset within the housing of the reader since the RFID tag 116 is smaller than electronic components 208 of the RFID reader 112.

It should be appreciated that the RFID tag 116 can be held within the housing of the RFID reader 112 using any type of securement mechanism. As some non-limiting examples, the RFID tag 116 can be held in the housing of the RFID reader 112 using friction fittings, glue, adhesives, double-sided tape, fasteners (e.g., nuts, bolts, screws, etc.), any combination thereof, or any other retainer device. In some embodiments, the RFID tag 116 is releasably mounted in the housing of the RFID reader 112 whereas in other embodiments the RFID tag 116 can be permanently fixed in the housing (e.g., by embedding components of the RFID tag 116 into the plastic of the housing.

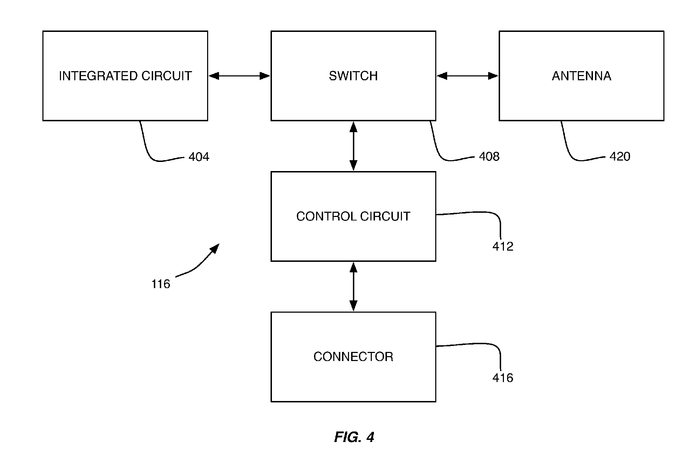

With reference now to Fig. 4, components of the RFID tag 116 will be described in accordance with embodiments of the present disclosure. The RFID tag 116 may include one or more Integrated Circuits (ICs) 404, a switch 408, a control circuit 412, a connector 416, and an antenna 420. In some embodiments, the components of the RFID tag 116 may be contained in a known tag form factor such as a card-type structure, a key fob, a sticker, or the like. Although not depicted, the RFID tag 116 may also comprise an internal power source (e.g., battery, solar cell and converter, etc.), in which case the RFID tag 116 may be referred to as an active tag. Passive tags, on the other hand, do not comprise an internal power source and, instead, rely on power from inductive coupling with another RF field (e.g., a field generated by an NFC device 120 and/or RFID reader 112).

The IC 404 may correspond to one or many ICs or IC components. In particular, the IC 404 may comprise digital circuitry that generates and transmits a predetermined response when activated by an external RF field. In some embodiments, the IC 404 may include memory in addition to processing circuitry. As an example, the IC 404 may comprise memory sufficient to store access control keys, encryption keys, cryptographic algorithms, and combinations thereof.

In some embodiments, the IC 404 also provides security functions to the RFID tag 116. As an example, the IC 404 may provide the RFID tag 116 with an encryption algorithm, thereby enabling the RFID tag 116 to exchange encrypted communications with other devices, such as the RFID reader 112 and NFC device 120. Encryption keys and the like may also be stored in the IC 404 in a secure fashion.

The switch 408 may by an optional component. In some embodiments, the IC 404 may be connected directly to the antenna 420, in which case the RFID tag 116 does not require a switch 408 and control circuit 412. In other embodiments, the switch 408 may reside between the IC 404 and antenna 420 and be operated by the control circuit 412. As an example, and as described above, the antenna 420 may introduce noise into a system where the RFID reader 112 is attempting to read an external tag or attempting to directly read a key from the NFC device 120 operating in an emulation mode. If this becomes the case, the RFID reader 112 may be configured to provide instructions to the control circuit 412 via the connector 416 to disconnect the IC 404 from the antenna 420 via actuation of the switch 408. In other words, if the RFID reader 112 determines that too much noise is being introduced by the RFID tag 116, then the RFID reader 112 may ask the control circuit 412 to move the switch 408 from a closed position to an open position.

The switch 408 may comprise a logical and/or physical switch. As an example, the switch 408 may correspond to a physical switch that moves between connectors of the antenna 420 and IC 404. Alternatively, the switch 408 may correspond to a software switch, digital switch, or the like.

The control circuit 412 may comprise a micro-controller 412 that contains logic capable of coupling and decoupling the IC 404 and antenna 420 via actuation of the switch 408. The control circuit 412 may receive its instructions from the connector 416, which provides an interface between the RFID tag 116 and RFID reader 112. The connector 416 may comprise a wired port or a wireless interface (e.g., a second antenna) between the RFID tag 116 and RFID reader 112.

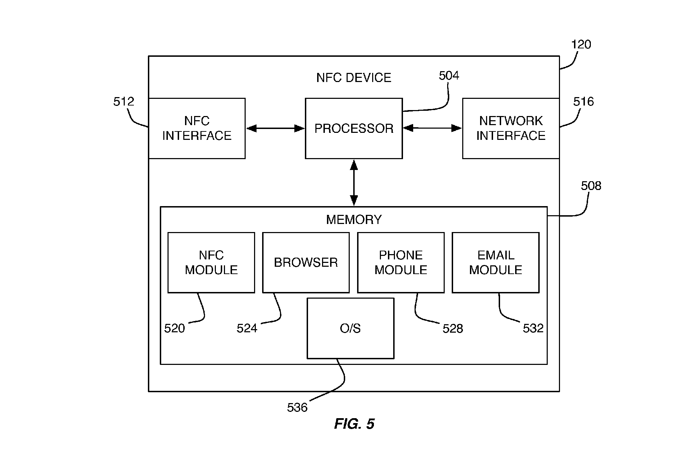

With reference now to Fig. 5, components of the NFC device 120 will be described in accordance with embodiments of the present disclosure. The NFC device 120 may correspond to a mobile communication device such as a cellular phone, smart phone, tablet, laptop, or any other device that is NFC-enabled. The NFC device 120 is depicted as comprising a processor 504, memory 508, an NFC interface 512, and a network interface 516. In some embodiments, the processor 504 may correspond to a plurality of processors, each configured to perform certain operations for the NFC device 120. As an example, the NFC device 120 may have dedicated processors for its NFC functions and other functions. In some embodiments, the components of the NFC device 120 may be connected together via a data bus or similar architecture. Thus, although the components are depicted as being connected via the central process 504, such an arrangement of components is not required.

The processor 504 may correspond to a microprocessor, Central Processing Unit (CPU), collection of processors or CPUs, or the like. In some embodiments, the processor 504 may be configured to execute instructions stored in memory 508, thereby providing functionality to the NFC device 120.

The memory 508 may comprise a number of modules or instruction sets (e.g., applications, drivers, etc.) stored therein. In some embodiments, the memory 508 may include volatile and/or non-volatile memory. As some non-limiting examples, the memory 508 may include an NFC module 520, a browser 524, a phone module 528, an email module 532, and an Operating System (O/S) 536. The NFC module 520 may comprise instructions that, when executed by the processor 504, enable the NFC functionality of the NFC device 120. For instance, the NFC module 520 may be responsible for causing the NFC device 120 to operate in a card emulation mode, a read/write mode, and/or a peer-to-peer mode. The NFC module 520 may also correspond to a specific portion of memory where sensitive data (e.g., key(s), encryption algorithms, PINs, credit card numbers, payment authorization information, other transaction data, etc.) is securely stored on the NFC device 120. As an example, the NFC module 520 may include a read/write protected area of memory and, in some instances, the memory location may be encrypted. It should be noted that the memory 508 may correspond to a memory location other than the secure element of the NFC device 120, which is traditionally embodied as a SIM card or an embedded secure element where NFC data is stored in an encryption fashion, since this formal secure element will likely be controlled by the MNOs. Thus, the NFC module 520 may correspond to specific memory or memory locations in addition to providing the executable instructions for the processor 504.

When executed, the NFC module 520 may cause the processor 504 to exchange information with other devices according to known NFC protocols via the NFC interface 512. In some embodiments, the NFC interface 512 may include a coil or antenna that creates an inductive coupling with other RF-enabled devices. The size of the NFC interface 512 may depend upon the overall size of the NFC device 120 as well as other antennas contained within the NFC device 120.

The other phone functionality of the NFC device 120 may be provided by the other modules 524, 528, 532 and O/S 536 stored in memory 508. As examples, the O/S 536 may correspond to a mobile operating system specifically designed for smart phones or the like. Non-limiting examples of an O/S 536 include Android®, iOS®, BlackberryOS®, Windows®, Windows Mobile®, and the like. The O/S 536 may be responsible for providing the basic functionality of the phone (e.g., controlling user input and output functions, microphone functions, coordinating drivers, etc.) in addition to coordinating operations of the applications and other modules stored in memory 508.

The browser 524 may provide the NFC device 120 with the ability to browse the Internet, for example. The browser 524, in some embodiments, corresponds to an application that enables the NFC device 120 to exchange information with servers and other data providers over a communication network using known Internet Protocols (e.g., HTTP, HTML, XML, etc.). Non-limiting examples of browsers 524 include Internet Explorer®, Safari®, Google Chrome®, mobile versions thereof, etc.

The phone module 528 may provide the NFC device 120 with the ability to initiate and respond to calls (e.g., voice calls, video calls, multi-media collaborations, etc.). The phone module 528 may also enable a user to perform advanced communication functions such as accessing voicemail, establishing conference calls, etc.

The email module 532 may provide the NFC device 120 with the ability to exchange electronic messages with other devices over a communication network. As examples, the email module 532 may specifically support email communications. It should also be appreciated that the email module 532 may support other types of communications such as social media communications (e.g., Facebook®, Twitter®, etc.), Short Message Service (SMS) messaging, Multimedia Messaging Services (MMS), data messages transmitted over the Internet (e.g., in accordance with an IP protocol), and so on.

Communications between the NFC device 120 and a broader communication network may be facilitated by the network interface 516, which may actually include several interfaces to different networks or network types. For instance, the network interface 516 may comprise a cellular network interface that enables the NFC device 120 to interact with a cellular network, which is usually provided by a MNO. The network interface 516 may alternatively or additionally include an 802.11N interface (e.g., Wi-Fi interface), a Universal Serial Bus (USB) port, or any other wired or wireless interface to the communication bus of the NFC device 120.

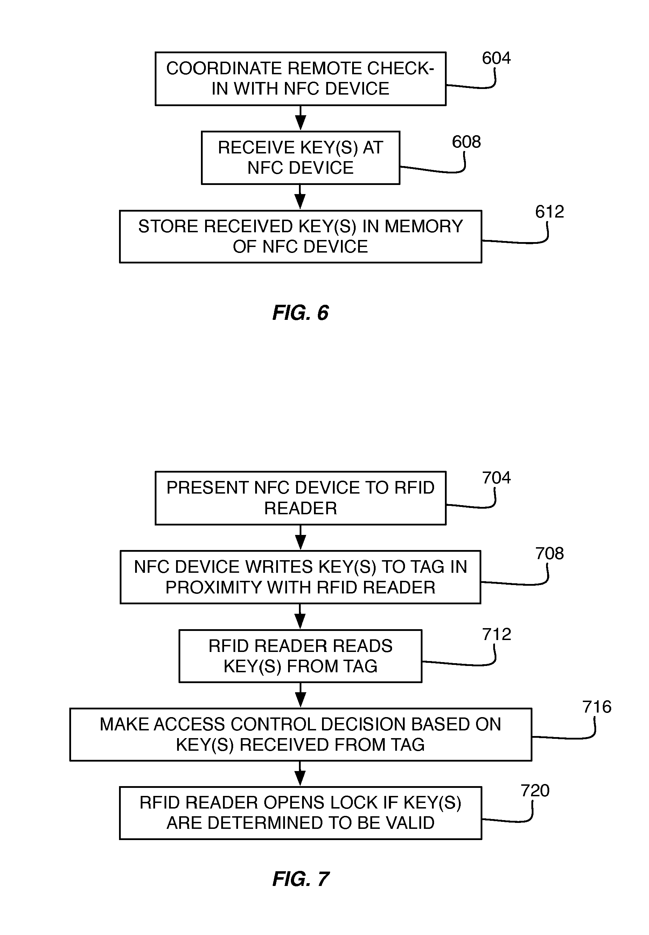

With reference now to Fig. 6, a method of obtaining one or more keys at an NFC device 120 will be described in accordance with embodiments of the present disclosure. The method begins with a user or guest coordinating a remote check-in for their mobile device (e.g., NFC device 120) (step 604). Coordination of the remote check-in may be effected with the NFC device 120 itself or the user may coordinate the remote check-in from some other computer. In the latter scenario, the user may provide the server or provider of the keys with the telephone number for the NFC device 120, thereby allowing the provider of the keys to target the NFC device 120.

Thus, the method continues with the provider of the keys (e.g., hotel, access control system administrator, etc.) sending the key(s) to the NFC device 120. The key(s) are subsequently received by the NFC device 120 (step 608). In some embodiments, the key(s) are received via the network interface 516, for example, when the key(s) are sent via SMS, MMS, email, or the like.

Upon receiving the key(s), the NFC device 120 stores the key(s) in a secure (e.g., encrypted) area of its memory 508 (step 612). In some embodiments, the key(s) may be stored in a secure element of the NFC device 120.

With reference now to Fig. 7, a method of operating an NFC device 120 in a read/write mode to obtain access to a secure point of access will be described in accordance with embodiments of the present disclosure. The method begins when the NFC device 120 is presented to an RFID reader 112 (step 704). Upon entering an active zone of the RFID reader 112 (e.g., a space in which the RF field produced by the RFID reader 112 is sufficient to couple with or power the NFC device 120 (or any other passive RFID tag)), the NFC module 520 is activated and causes the NFC device 120 to begin operating in an NFC mode of operation. In this example, the NFC module 520 causes the NFC device 120 to begin operating in a read/write mode.

Thus, the method continues with the NFC module 520 obtaining the necessary key(s) from their storage location (e.g., from the memory 508 of the NFC device 120). The key(s) are then written to the RFID tag 116 by the NFC device 120 (step 708). Because the RFID tag 116 is located in proximity with the RFID reader 112, the key(s) are written to the RFID tag 116 while the RFID reader 112 and NFC device 120 are coupled to one another. Once written to the RFID tag 116, the key(s) are stored in the memory of the RFID tag 116. For example, the key(s) may be stored in volatile or non-volatile memory of the RFID tag 116, which may be incorporated in the IC or separate therefrom.

The NFC device 120 may also read some data back from the RFID tag 116. In particular, the NFC device 120 may read back the RFID tag's 116 UID and any other information that identifies the RFID tag 116 and/or RFID reader 112 in a substantially unique fashion. The information read back from the RFID tag 116 can then be transmitted by the NFC device 120 to a central system (e.g., hotel front desk, guest management system, control panel, central server, etc.), thereby notifying the central system of the guest's arrival. In some embodiments, status information for the RFID reader 112 may also be updated in a centralized access control log based on the information received from the RFID tag 116 via the NFC device 120.

The RFID reader 112 then reads the key(s) from the RFID tag 116 (step 712). This process is completed in a known fashion, for example, by following one or more of the ISO standards mentioned above. Upon obtaining the key(s) from the RFID tag 116, the RFID reader 112 analyzes the key(s) or access control information contained therein to make an access control decision based on the key(s) and/or their contents (step 716). It should also be appreciated that the RFID reader 112 may analyze the UID of the tag that provided the keys. If the UID of the tag does not match the UID of the tag paired with or trusted by the RFID reader 112, then the keys may be rejected, even if the keys correspond to valid keys. In some embodiments, the RFID reader 112 analyzes access control information contained within the keys to determine whether access should be granted or not. It may also be possible that the RFID reader 112 compares the key(s) received from the RFID tag 116 with a list of valid keys stored in its local memory. In some embodiments, the RFID reader 112 sends the key(s) to a control panel located remote from the RFID reader 112 so that the control panel can analyze the keys and/or compare the received key(s) with valid or invalid keys.

If the received key(s) are determined to be authorized keys (e.g., the key is valid and useable for the RFID reader 112 during the time at which the key was read by the RFID reader 112), then the RFID reader 112 will open the lock mechanism 104 or engage the lock mechanism 104 with the handle 108, thereby allowing a user to open the lock mechanism 104 (step 720). If the received keys are not determined valid (or were determined to be invalid), then the RFID reader 112 may not perform any action or the RFID reader 112 may proactively indicate that the key(s) read from the RFID tag 116 were invalid. For instance, the RFID reader 112 may sound an alarm, send a notification to security personnel, store information in an activity log about the invalid keys, light an indicator, etc.

It should be noted that once the RFID reader 112 obtains and analyzes the keys received from the NFC device 120 via the RFID tag 116, the RFID reader 112 may cause the keys to be deleted/disabled/overwritten from the memory of the RFID tag 116. This may be done by sending one or more of a delete, disable, or overwrite command back to the RFID tag 116.

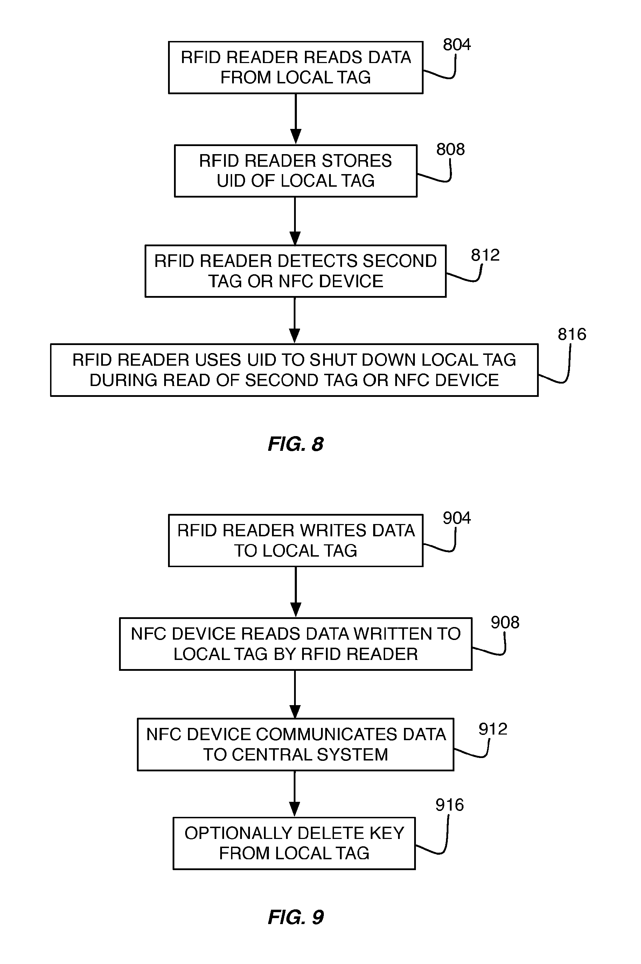

With reference now to Fig. 8, an anti-collision method will be described in accordance with embodiments of the present disclosure. The method begins when the RFID reader 112 reads data from a local RFID tag 116 (step 804). In some embodiments, the "local tag" may correspond to the RFID tag 116 that is permanently or semi-permanently positioned in proximity with the RFID reader 112. More specifically, the local tag may correspond to an RFID tag 116 that is mounted inside of the housing of the RFID reader 112 or that has been affixed near the RFID reader 112 to support the access control methods described herein.

The information read from the local RFID tag 116 may include a UID of the local RFID tag 116. Upon receiving the UID of the local RFID tag 116, the RFID reader 112 may store the UID of the local RFID tag 116 in its own memory (step 808). The UID of the local RFID tag 116 may be stored in volatile or non-volatile memory. In some embodiments, the UID of the tag is paired with the specific RFID reader 112 with which it is associated (e.g., by virtue of being installed in the housing of the specific RFID reader 112). This ensures that only keys read from the paired RFID tag 116 (e.g., the local RFID tag 116) are accepted. In other words, if the RFID reader 112 reads a key from a tag other than the local RFID tag 116, the RFID reader 112 may either reject the key or require additional information to accept the key.

The method continues when the RFID reader 112 detects a second tag (e.g., a tag different from the local RFID tag 116) or when the RFID reader 112 detects an NFC device operating in a card emulation mode (step 812). Upon detecting such a device, the RFID reader 112 may instruct the local RFID tag 116 to shut down or stop RF communications for a predetermined amount of time (e.g., 1 minute, 30 seconds, etc.) (step 816). In some embodiments, the RFID reader 112 is capable of communicating such instructions directly to the local RFID tag 116 because it has obtained the local RFID tag's 116 UID. Upon receiving instructions to disable RF communications, the local RFID tag 116 may disengage or disconnect the IC 404 from the antenna 420 via actuation of the switch 408.

In this anti-collision method, the control circuit 412 of the local RFID tag 116 may have communications with the RFID reader 112 via a service interface (e.g., connector 416) of the RFID reader 112. Thus, in addition to receiving control instructions from the RFID reader 112 via the connector 416, the local RFID tag 116 may further receive power from the RFID reader 112 via the connector 416.

With reference now to Fig. 9, a data management method will be described in accordance with at least some embodiments of the present disclosure. The method begins with the RFID reader 112 writing data to the local RFID tag 116 (step 904). The data written to the local RFID tag 116 can include any type of access control data. Non-limiting examples of data that can be written to the local RFID tag 116 include keys, tag UIDs, encryption keys, cryptographic algorithms, access logs (e.g., historical records of access attempts at the RFID reader 112), portions of access logs, combinations thereof, etc.

The data received at the local RFID tag 116 is then stored in memory of the RFID tag 116. Subsequently, the data stored on the local RFID tag 116 can be read by the NFC device 120 operating in a read/write mode of operation (step 908). The information obtained by the NFC device 120 can then be communicated to a central access control system, for example by transmission over a communication network (step 912). As an example, the RFID reader 112 may correspond to a stand-alone reader and may, therefore, not have any direct connectivity with a control panel or similar access control system backend/host. In this scenario, the stand-alone reader can utilize the communication capabilities of the NFC device 120 to share information with the access control system backend. Upon communicating the information to the NFC device 120, the local RFID tag 116 can optionally delete the information stored thereon (step 916). Furthermore, the keys communicated between the RFID reader 112 and NFC device 120 in any of the methods described herein can be deleted from memory after a predetermined amount of time to ensure that the keys are not copied and used without permission.

As can be appreciated, RFID tags can be embedded in to all kind of media such as cards, passports, wristbands, stickers, etc. The present disclosure is not limited to any particular RFID tag format or embodiment, but can be used with any format of an RFID tag.

Furthermore, the above-described system will work with hotel employees in addition to working for hotel guests. In the case of employees, "check-in" becomes date of employment and check-out is when employment with the company stops or check-in and check-out may occur on a daily basis (e.g., an employee is given a new key on a daily basis, thereby ensuring up-to-date security policies for employees).

The front desk device, identified above, is only an example and represents any device that can be used to put information on a RFID tag. The device that places information on an RFID tag does not necessarily need to be located at a front desk of a hotel; instead, such a device can be located anywhere without departing from the scope of the present disclosure.

The disclosed system may be adopted in any type of RFID access control setting, including but not limited to residential, office, hotel, garage, public transportation, etc. It may also be used in payment and ticketing systems.

It should also be appreciated that the RFID reader can be placed anywhere, on the lock, on the wall next to the lock, in elevators without a lock, gate controllers, etc.

In the foregoing description, for the purposes of illustration, methods were described in a particular order. It should be appreciated that in alternate embodiments, the methods may be performed in a different order than that described. It should also be appreciated that the methods described above may be performed by hardware components or may be embodied in sequences of machine-executable instructions, which may be used to cause a machine, such as a general-purpose or special-purpose processor (GPU or CPU) or logic circuits programmed with the instructions to perform the methods (FPGA). These machine-executable instructions may be stored on one or more machine readable mediums, such as CD-ROMs or other type of optical disks, floppy diskettes, ROMs, RAMs, EPROMs, EEPROMs, magnetic or optical cards, flash memory, or other types of machine-readable mediums suitable for storing electronic instructions. Alternatively, the methods may be performed by a combination of hardware and software.

Specific details were given in the description to provide a thorough understanding of the embodiments. However, it will be understood by one of ordinary skill in the art that the embodiments may be practiced without these specific details. For example, circuits may be shown in block diagrams in order not to obscure the embodiments in unnecessary detail. In other instances, well-known circuits, processes, algorithms, structures, and techniques may be shown without unnecessary detail in order to avoid obscuring the embodiments.

Also, it is noted that the embodiments were described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function.

Furthermore, embodiments may be implemented by hardware, software, firmware, middleware, microcode, hardware description languages, or any combination thereof. When implemented in software, firmware, middleware or microcode, the program code or code segments to perform the necessary tasks may be stored in a machine readable medium such as storage medium. A processor(s) may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

While illustrative embodiments of the disclosure have been described in detail herein, it is to be understood that the inventive concepts may be otherwise variously embodied and employed, and that the appended claims are intended to be construed to include such variations, except as limited by the prior art.

## Claims

1. A method of operating an access control system, the method comprising:
receiving a key at a Near Field Communications (NFC) device;
storing the key in electronic memory of the NFC device;
presenting the NFC device to a Radio Frequency Identification (RFID) reader located in proximity to a point of access control;
while the NFC device is presented to the RFID reader, writing the key to an RFID tag that is positioned in proximity to the RFID reader;
reading the key from the RFID tag with the RFID reader;
comparing the key read from the RFID tag with one or more valid keys; and
based on the comparison of the key read from the RFID tag, making an access control decision for the NFC device.

2. The method of claim 1, wherein the key comprises a digital key with access permissions associated therewith.

3. The method of claim 1, wherein the electronic memory of the NFC device comprises memory that is at least one of read/write protected and encryption protected.

4. The method of claim 1, further comprising:
detecting a second RFID device in proximity to the RFID reader, the second RFID device being different from the RFID tag;
in response to detecting the second RFID device, sending an instruction from the RFID reader to the RFID tag to temporarily disable communication functionality of the RFID tag; and
while the RFID tag has communication functionality temporarily disabled, exchanging information between the RFID reader and second RFID device.

5. The method of claim 1, wherein the key read from the RFID tag is compared with the one or more valid keys by the RFID reader.

6. The method of claim 1, wherein the key read from the RFID tag is analyzed by a control panel in communication with the RFID reader but located remote from the RFID reader.

7. The method of claim 1, wherein the key is received at the NFC device via at least one of a Short Message Service (SMS) message, an email message, a Multimedia Message Service (MMS) message, and a data message transmitted over the Internet.

8. The method of claim 1, wherein the RFID tag is mounted in a housing of the RFID reader.

9. The method of claim 1, further comprising:
writing data from the RFID reader to the RFID tag;
storing the data obtained from the RFID reader in memory of the RFID tag; and
communicating the data obtained from the RFID reader to a mobile phone via one or more data exchange format messages.

10. An access control system, comprising:
a Radio Frequency Identification (RFID) reader comprising electronic components enabling the RFID reader to generate a Radio Frequency (RF) field and exchange data with RFID devices positioned within the RF field; and
an RFID tag positioned in proximity with the RFID reader, the RFID tag comprising an antenna and memory, wherein the RFID tag is configured to have a key written to its memory by a Near Field Communications (NFC) device, and wherein the RFID tag is further configured to communicate the key written to its memory by the NFC device to the RFID reader.

11. The access control system of claim 10, wherein the RFID reader comprises a housing and wherein the RFID tag is positioned within the housing.

12. The access control system of claim 10, wherein the key written to the memory of the RFID tag is stored therein for a predetermined amount of time and then deleted.

13. The access control system of claim 10, wherein the RFID reader comprises an antenna.

14. The access control system of claim 13, wherein a center of the antenna of the RFID tag is offset relative to a center of the antenna of the RFID reader.

15. The access control system of claim 10, wherein the RFID reader is further configured to instruct a control circuit of the RFID tag to disengage the antenna of the RFID tag from an Integrated Circuit (IC) of the RFID tag for a predetermined amount of time.

16. The access control system of claim 10, wherein the RFID reader provides power to the RFID tag via at least one of the RF field and a service interface.

17. A Near Field Communications (NFC) device, comprising:
a processor;
memory including an NFC module; and
an NFC interface, wherein the NFC module is configured to determine that the NFC device is positioned within a Radio Frequency (RF) field produced by a Radio Frequency Identification (RFID) reader and in response to determining that the NFC device is positioned within the RF field produced by the RFID reader, write an access control key to an RFID tag also positioned within the RF field so that the RFID tag can communicate the access control key to the RFID reader on behalf of the NFC device.

18. The NFC device of claim 17, further comprising a network interface enabling the NFC device to receive the access control key.

19. The NFC device of claim 18, wherein the NFC module further enables the NFC device to read information back from the RFID tag after communicating the access control key to the RFID tag.

20. The NFC device of claim 19, wherein the information read back from the RFID tag is transmitted to a central system via the network interface.
